# EUROPEAN PATENT APPLICATION

(11) **EP 4 797 354 A1**
(43) Date of publication of application: **26.08.2026**
(21) Application number: 24932266.0
(22) Date of filing: 10.09.2024
(51) Int. Cl.: H01M 4/525, C01G 53/00, H01M 4/505

(54) **METHOD FOR EVALUATING LITHIUM-ION BATTERY POSITIVE ELECTRODE ACTIVE MATERIAL, AND LITHIUM-ION BATTERY POSITIVE ELECTRODE ACTIVE MATERIAL**

(30) Priority: 28.03.2024 JP 2024054811
(71) Applicant: JX Advanced Metals Corporation, Tokyo 105-8417 (JP)
(72) Inventor: KAWAHASHI,Yasuhiro, Kitaibaraki-shi, Ibaraki 319-1535 (JP)
(74) Representative: Yeadon IP Limited
(86) International application number: PCT/JP2024/032429
(87) International publication number: WO 2025/203747

(57) **Abstract**

A method for evaluating a positive electrode active material for a lithium-ion battery, comprising: a step of measuring XRD diffraction patterns of a group of active materials for a lithium-ion battery, a step of calculating a crystallite size of the (003) plane from the XRD diffraction patterns of the active materials using the Scherrer equation; a step of performing cycle characteristic evaluation for each battery fabricated using active materials having mutually different crystallite sizes of the (003) plane among the active materials as electrode materials, and deriving a correlation between the obtained cycle characteristic evaluation results and the crystallite sizes of the active materials; and a step of, based on the correlation, measuring a crystallite size of an evaluation active material corresponding to the crystallite sizes of the group of active materials, and evaluating cycle characteristics of the evaluation active material.

## Description

### FIELD OF THE INVENTION

The present invention relates to an evaluation method for a positive electrode active material for a lithium-ion battery, and a positive electrode active material for a lithium-ion battery.

### BACKGROUND OF THE INVENTION

In recent years, along with the rapid growth in small electronic devices such as mobile phones and laptop computers, there has been a rapid increase in demand for non-aqueous electrolyte secondary batteries as rechargeable power sources. As positive electrode active materials for non-aqueous electrolyte secondary batteries, lithium cobalt composite oxides typified by lithium cobaltate (LiCoO₂), lithium nickel composite oxides typified by lithium nickelate (LiNiO₂), lithium manganese composite oxides typified by lithium manganate (LiMnO₂), and the like are widely used, and research and development of positive electrode active materials for lithium-ion batteries using these materials have been conducted actively.

Patent Literature 1 discloses a positive electrode active material for a lithium-ion battery, which comprises: positive electrode active material particles having a composition represented by the following formula: LiₐNi_{b}Co_{c}Mn_{d}O₂ (wherein 1.00 ≤ a ≤ 1.02, 0.8 ≤ b ≤ 0.9, and b + c + d = 1); and a coating layer containing lithium niobate that partially covers the surface of the positive electrode active material particles, wherein the proportion of Nb relative to the total amount of Ni, Co, and Mn is 0.4 to 1.2 mol%. It is described that such a configuration provides a positive electrode active material for a lithium-ion battery having favorable battery characteristics.

### CITATION LIST

### Patent Literatures

[Patent Literature 1] Japanese Patent Laid-Open No. 2019-139862

### SUMMARY OF THE INVENTION

In the development of positive electrode active materials for lithium-ion batteries, it is important to evaluate cycle characteristics, which represent battery performance. However, because evaluating battery characteristics requires fabricating precise cell electrodes and obtaining data by repeatedly conducting charge/discharge tests over several days using a charge/discharge tester, this presents a problem in that it takes a long time to obtain results.

The present invention has been made to solve the above-described problems, and an object of the present invention is to provide an evaluation method for a positive electrode active material for a lithium-ion battery, and a positive electrode active material for a lithium-ion battery, that enable efficient evaluation of cycle characteristics without fabricating a battery.

The present invention completed on the basis of the above findings is defined as follows.
[1] A method for evaluating a positive electrode active material for a lithium-ion battery, comprising:
   a step of measuring XRD diffraction patterns of a group of positive electrode active materials for a lithium-ion battery, each represented by the compositional formula: LiₐNi_{(1-b-c-d)}Co_{b}Mn_{c}M_{d}O₂
   (wherein M is at least one selected from Mg, Al, Ca, and Ta; 0.98 ≤ a ≤ 1.10; 0.13 ≤ b ≤ 0.22; 0.02 ≤ c ≤ 0.32; and 0 ≤ d ≤ 0.007);
   a step of calculating a crystallite size of the (003) plane from the XRD diffraction patterns of the positive electrode active materials using the Scherrer equation;
   a step of performing cycle characteristic evaluation for each battery fabricated using positive electrode active materials having mutually different crystallite sizes of the (003) plane among the positive electrode active materials as electrode materials, and deriving a correlation between the obtained cycle characteristic evaluation results and the crystallite sizes of the positive electrode active materials; and
   a step of, based on the correlation, measuring a crystallite size of an evaluation positive electrode active material corresponding to the crystallite sizes of the group of positive electrode active materials, and evaluating cycle characteristics of the evaluation positive electrode active material from the crystallite size of the evaluation positive electrode active material.
[2] The evaluation method for a positive electrode active material for a lithium-ion battery according to [1], wherein the positive electrode active material is represented by the compositional formula: LiₐNi_{(1-b-c-d)}Co_{b}Mn_{c}M_{d}O₂
   (wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007).
[3] The evaluation method for a positive electrode active material for a lithium-ion battery according to [2], wherein, if the crystallite size of the (003) plane of the evaluation positive electrode active material is 580 to 840 Å, the cycle characteristics of the evaluation positive electrode active material are evaluated as favorable.
[4] The evaluation method for a positive electrode active material for a lithium-ion battery according to [1], wherein the positive electrode active material is represented by the compositional formula: LiₐNi_{(1-b-c-d)}Co_{b}Mn_{c}M_{d}O₂
   (wherein M is Ta; 0.98 ≤ a ≤ 1.09; 0.13 ≤ b ≤ 0.16; 0.02 ≤ c ≤ 0.05; and 0 ≤ d ≤ 0.007).
[5] The evaluation method for a positive electrode active material for a lithium-ion battery according to [4], wherein, if the crystallite size of the (003) plane of the evaluation positive electrode active material is 400 to 650 Å, the cycle characteristics of the evaluation positive electrode active material are evaluated as favorable.
[6] A positive electrode active material for a lithium-ion battery represented by the compositional formula: LiₐNi_{(1-b-c-d)}Co_{b}Mn_{c}M_{d}O₂
   (wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007),
   wherein, when an XRD diffraction pattern of the positive electrode active material is measured and a crystallite size of the (003) plane is calculated therefrom using the Scherrer equation, the crystallite size is 580 to 840 Å.
[7] A positive electrode active material for a lithium-ion battery represented by the compositional formula: LiₐNi_{(1-b-c-d)}Co_{b}Mn_{c}M_{d}O₂
   (wherein M is Ta; 0.98 ≤ a ≤ 1.09; 0.13 ≤ b ≤ 0.16; 0.02 ≤ c ≤ 0.05; and 0 ≤ d ≤ 0.007),
   wherein, when an XRD diffraction pattern of the positive electrode active material is measured and a crystallite size of the (003) plane is calculated therefrom using the Scherrer equation, the crystallite size is 400 to 650 Å.

According to the present invention, it is possible to provide an evaluation method for a positive electrode active material for a lithium-ion battery, and a positive electrode active material for a lithium-ion battery, that enable efficient evaluation of cycle characteristics without fabricating a battery.

### BRIEF DESCRIPTION OF THE DRAWINGS

FIG. 1 is an example of an XRD diffraction pattern of a positive electrode active material for a lithium-ion battery.
FIG. 2 is a graph plotting the crystallite sizes of the positive electrode active materials of Test Examples 1A to 11A on the X-axis and the cycle characteristics on the Y-axis.
FIG. 3 is a graph plotting the crystallite sizes of the positive electrode active materials of Test Examples 1B to 10B on the X-axis and the cycle characteristics on the Y-axis.

### DETAILED DESCRIPTION OF THE INVENTION

The embodiments for carrying out the present invention will be described in detail below. The present invention is not limited to the following embodiments, and it is understood that design changes, improvements, and the like may be made as appropriate based on ordinary knowledge of a person skilled in the art without departing from the spirit of the present invention.

### (Positive Electrode Active Material for Lithium-Ion Battery)

The positive electrode active material for a lithium-ion battery according to an embodiment of the present invention is represented by the compositional formula: LiₐNi_{(1-b-c-d)}Co_{b}Mn_{c}M_{d}O₂ (wherein M is at least one selected from Mg, Al, Ca, and Ta; 0.98 ≤ a ≤ 1.10; 0.13 ≤ b ≤ 0.22; 0.02 ≤ c ≤ 0.32; and 0 ≤ d ≤ 0.007). In the compositional formula, the lithium composition a satisfies 0.98 ≤ a ≤ 1.10. Since the lithium composition a is 0.98 or greater, reduction of nickel due to lithium deficiency can be suppressed. Furthermore, since the lithium composition a is 1.10 or less, residual alkaline components that can become a resistance component in the battery, such as lithium carbonate and lithium hydroxide present on the surface of the positive electrode active material particles, can be suppressed.

The positive electrode active material for a lithium-ion battery according to an embodiment of the present invention has a nickel composition of 1-b-c-d controlled to satisfy 0.453 ≤ 1-b-c-d ≤ 0.85 in the compositional formula, and since the nickel composition is 0.453 or greater, favorable battery capacity for a lithium-ion battery can be obtained. Furthermore, since the nickel composition is 0.85 or less, the crystal structure is stabilized, and cycle characteristics can be improved by reducing the expansion/contraction behavior of the crystal lattice due to the insertion and extraction of lithium during charge and discharge.

The positive electrode active material for a lithium-ion battery according to an embodiment of the present invention has a total of b representing the Co composition, c representing the Mn composition, and d representing at least one selected from Mg, Al, Ca, and Ta of 0.15 ≤ b + c + d ≤ 0.547 in the compositional formula, whereby cycle characteristics are improved and the expansion/contraction behavior of the crystal lattice due to the insertion and extraction of lithium during charge and discharge can be reduced. If the total of b representing the Co composition, c representing the Mn composition, and d representing at least one selected from Mg, Al, Ca, and Ta exceeds 0.547, the addition amounts of Co, Mn, Mg, Al, Ca, and Ta may be too large, resulting in a risk of a significant decrease in initial discharge capacity or a cost disadvantage.

In the positive electrode active material for a lithium-ion battery according to an embodiment of the present invention, d representing at least one selected from Mg, Al, Ca, and Ta satisfies 0 ≤ d ≤ 0.007. Since d representing at least one selected from Mg, Al, Ca, and Ta is 0.007 or less, it is possible to suppress a significant decrease in initial discharge capacity that would otherwise result from an excessively large addition amount of Mg, Al, Ca, and Ta.

The positive electrode active material for a lithium-ion battery according to an embodiment of the present invention may be represented by the compositional formula: LiₐNi_{(1-b-c-d)}Co_{b}Mn_{c}M_{d}O₂ (wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007). Furthermore, as described in detail below, when an XRD diffraction pattern of the positive electrode active material represented by this compositional formula is measured, and a crystallite size of the (003) plane is calculated from the XRD diffraction pattern of the positive electrode active material using the Scherrer equation, the crystallite size is preferably 580 to 840 Å.

The positive electrode active material for a lithium-ion battery according to an embodiment of the present invention may also be represented by the compositional formula: LiₐNi_{(1-b-c-d)}Co_{b}Mn_{c}M_{d}O₂ (wherein M is Ta; 0.98 ≤ a ≤ 1.09; 0.13 ≤ b ≤ 0.16; 0.02 ≤ c ≤ 0.05; and 0 ≤ d ≤ 0.007). Furthermore, as described in detail below, when an XRD diffraction pattern of the positive electrode active material represented by this compositional formula is measured, and a crystallite size of the (003) plane is calculated from the XRD diffraction pattern of the positive electrode active material using the Scherrer equation, the crystallite size is preferably 400 to 650 Å.

The positive electrode active material for a lithium-ion battery according to an embodiment of the present invention is predominantly in the form of secondary particles comprising aggregated primary particles, and may be in a form partially containing primary particles that are not aggregated as secondary particles. The shapes of the primary particles constituting the secondary particles and the primary particles existing independently are not particularly limited, and may be, for example, various shapes such as substantially spherical, substantially ellipsoidal, substantially plate-like, and substantially needle-like. The form of aggregation of the primary particles is also not particularly limited, and may be various forms such as a form in which the primary particles aggregate in random directions, and a form in which the primary particles aggregate substantially uniformly in a radial direction from the center to form substantially spherical or substantially ellipsoidal secondary particles.

The positive electrode active material for a lithium-ion battery according to an embodiment of the present invention may have a 50% cumulative volume particle size D50 of 3.0 to 11.0 µm. Here, the 50% cumulative volume particle size D50 is the volume particle size at 50% cumulation in the volume-based cumulative particle size distribution curve. If the 50% cumulative volume particle size D50 of the positive electrode active material for a lithium-ion battery is less than 3.0 µm, the tap density decreases, resulting in a decrease in the energy density per unit volume. If the 50% cumulative volume particle size D50 of the positive electrode active material for a lithium-ion battery exceeds 11.0 µm, coarse particles increase, and coatability deteriorates when the slurried positive electrode active material is applied to a current collecting foil. The 50% cumulative volume particle size D50 of the positive electrode active material for a lithium-ion battery is more preferably 7.0 to 10.0 µm. As for the measurement method of the 50% cumulative volume particle size D50, first, 100 mg of a sample (powder) of the positive electrode active material is dispersed by irradiating with 40 W of ultrasonic waves for 60 seconds at 50% flow rate using a laser diffraction particle size distribution analyzer "MT3300EXII" manufactured by Microtrac, and then the particle size distribution is measured to obtain a volume-based cumulative particle size distribution curve. Next, in the obtained cumulative particle size distribution curve, the volume particle size at 50% cumulation can be taken as the 50% cumulative volume particle size D50 of the positive electrode active material powder. During measurement, the aqueous solvent is passed through a 0.02 µm filter, the solvent refractive index is set to 1.333, the particle permeability condition is set to permeable, the particle refractive index is set to 1.81, the shape is set to non-spherical, the measurement range is set to 0.021 to 2000 µm, and the measurement time is set to 30 seconds.

The positive electrode active material for a lithium-ion battery according to an embodiment of the present invention preferably has a tap density of 2.0 to 2.6 g/cc. When the tap density of the positive electrode active material is 2.0 g/cc or greater, a battery with high energy density per unit volume can be constructed. The tap density of the positive electrode active material is more preferably 2.1 to 2.6 g/cc, and even more preferably 2.3 to 2.6 g/cc. The tap density of the positive electrode active material can be measured, for example, as follows: 5 g of the positive electrode active material (powder) is placed in a 10 cc graduated cylinder, set in a powder density meter "KYT-4000K" manufactured by Seishin Enterprise Co., Ltd., tapped 1500 times with a stroke length of 55 mm, and then the scale of the graduated cylinder is read. Next, "sample charge amount (5 g) / graduated cylinder scale reading (cc)" is calculated, and this value is taken as the tap density (g/cc).

The positive electrode active material for a lithium-ion battery according to an embodiment of the present invention preferably has a BET specific surface area of 0.20 to 0.80 m²/g. When the BET specific surface area is 0.20 m²/g or greater, the contact area of the positive electrode active material increases, and the ionic conductivity of Li ions is enhanced. This enables the fabrication of a high-capacity lithium-ion battery. Furthermore, when the BET specific surface area exceeds 0.80 m²/g, the precipitation reaction of lithium compounds from residual alkaline components in the positive electrode active material is promoted during repeated charge and discharge. The precipitated lithium compound contributes to the internal resistance of the battery, reducing the charge/discharge capacity. The BET specific surface area is more preferably 0.3 to 0.70 m²/g. The BET specific surface area can be measured by the following method: first, 1.0 g of the positive electrode active material (powder) is weighed into a glass cell, set in a degassing device, the inside of the glass cell is filled with nitrogen gas, and then heat-treated at 40°C for 20 minutes in a nitrogen gas atmosphere for degassing. Thereafter, the glass cell containing the degassed sample (powder) is set in a specific surface area measuring device "Monosorb Model MS-21" manufactured by Quantachrome, and the specific surface area X is measured by the BET method (one-point method) while flowing a mixed gas of He: 70 at% - N₂: 30 at% as adsorption gas.

### (Evaluation Method for Positive Electrode Active Material for Lithium-Ion Battery)

Next, the evaluation method for a positive electrode active material for a lithium-ion battery according to an embodiment of the present invention will be described in detail below.

First, XRD diffraction patterns of a group of positive electrode active materials for a lithium-ion battery, each represented by the compositional formula: LiₐNi_{(1-b-c-d)}Co_{b}Mn_{c}M_{d}O₂ (wherein M is at least one selected from Mg, Al, Ca, and Ta; 0.98 ≤ a ≤ 1.10; 0.13 ≤ b ≤ 0.22; 0.02 ≤ c ≤ 0.32; and 0 ≤ d ≤ 0.007), are measured.

The XRD diffraction pattern can be measured using, for example, the following XRD diffractometer under the following conditions:
- XRD diffractometer: SmartLab (manufactured by Rigaku Corporation)
- X-ray source: CuKα (λ = 1.5406 Å)
- Sample: positive electrode active material applied to a glass sample holder (2 cm × 1.5 cm, depth 0.3 mm)
- Detector: D/tex
- Measurement range: 2θ = 10° to 80°
- Scan axis: 2θ/θ; scan speed: 1 degree min⁻¹
- Step width: 0.01 degree
- Slit width: IS (DS) 1/4°, RS1 10 mm, RS2 10 mm

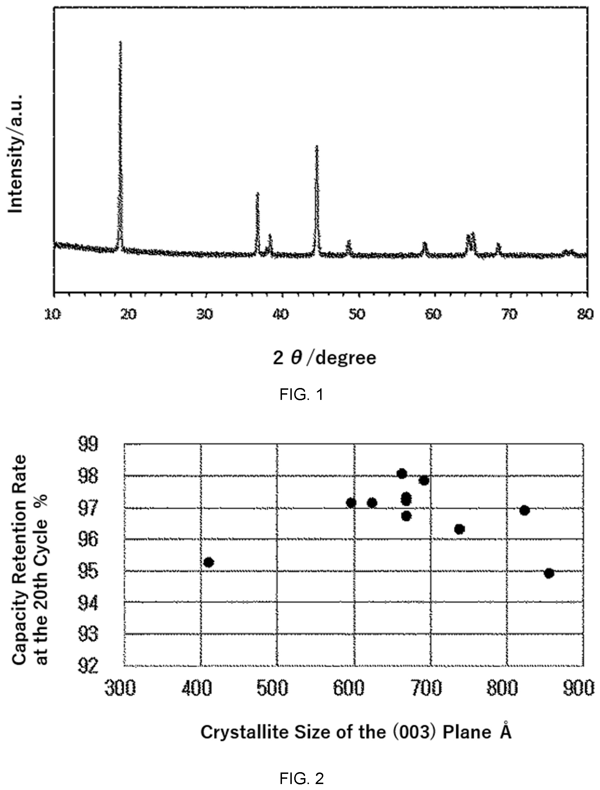

An example of the XRD diffraction pattern obtained here is shown in FIG. 1.

Subsequently, from the measured XRD diffraction patterns of the group of positive electrode active materials for a lithium-ion battery, the crystallite size of the (003) plane is calculated using the Scherrer equation. Specifically, the crystallite size of the (003) plane is calculated from the full width at half maximum of the diffraction peak of the (003) plane in the XRD diffraction pattern of the positive electrode active material for a lithium-ion battery using the Scherrer equation represented by the following formula (1): $s = Kλ / Bcosθ$

In the above formula (1), s is the crystallite size of the (003) plane, λ is the X-ray wavelength, B is the full width at half maximum of the diffraction peak of the (003) plane, θ is the diffraction angle (rad), and K is the Scherrer constant. In the present embodiment, K is set to 0.9.

Next, cycle characteristic evaluation is performed for each battery fabricated using positive electrode active materials having mutually different crystallite sizes of the (003) plane among the positive electrode active materials as electrode materials.

Specifically, first, a plurality of positive electrode active materials having mutually different crystallite sizes of the (003) plane calculated by the Scherrer equation are selected. The number of positive electrode active materials to be selected is not particularly limited, but it is preferably 5 or more, more preferably 7 or more, even more preferably 10 or more, and still more preferably 15 or more.

Next, for each of the selected positive electrode active materials having mutually different crystallite sizes of the (003) plane, a battery is fabricated using the respective positive electrode active material as an electrode material. The battery to be fabricated is not particularly limited as long as it is a battery using the positive electrode active material as a positive electrode material. The battery can be fabricated, for example, as described below, and the discharge capacity and cycle characteristics (capacity retention rate) of the battery can be evaluated as described below.

First, the positive electrode active material, acetylene black as a conductive auxiliary agent, and polyvinylidene fluoride as a binder are weighed in a ratio of 90:5:5, and the polyvinylidene fluoride as the binder is dissolved in an organic solvent (N-methylpyrrolidone), mixed together with the positive electrode active material and the conductive auxiliary agent to form a slurry, applied to an aluminum foil, dried, and press-molded to form a positive electrode.

Next, a 2032-type coin cell for evaluation is fabricated as a battery structure using Li as the counter electrode, and a solution of 1 M LiPF₆ dissolved in EC-DMC (3:7) is used as the electrolytic solution. Under the following conditions, the discharge capacity (0.05 C) and the charge/discharge cycle (capacity retention rate) are measured:
- Discharge capacity (0.05 C)
   Temperature: 25°C; charge: 4.30 V, 0.05 C, 20 h; discharge: 3.0 V, 0.05 C
- Charge/discharge cycle (capacity retention rate)
   Temperature: 55°C; charge: 4.30 V, 1 C, 2.5 h; discharge: 3.0 V, 1 C

Ratio of discharge capacity at the 20th cycle to the discharge capacity at the 1st cycle.

Such cycle characteristic evaluation is performed for each battery fabricated using positive electrode active materials having mutually different crystallite sizes of the (003) plane as electrode materials for the batteries.

Next, a correlation between the obtained cycle characteristic evaluation results and the crystallite sizes of the positive electrode active materials is derived.

Specifically, a graph is prepared with the crystallite size on the X-axis and the cycle characteristics on the Y-axis. In this graph, for example, a cycle characteristic equal to or greater than a predetermined value, such as 95.0% or greater or 96.0% or greater, is defined as favorable. Then, from the graph, the range of crystallite sizes corresponding to cycle characteristics equal to or greater than the predetermined value is derived. The relationship thus derived (the relationship that if the crystallite size of the positive electrode active material falls within a certain range, the cycle characteristics obtained will be equal to or greater than the predetermined value) constitutes the correlation between the obtained cycle characteristic evaluation results and the crystallite sizes of the positive electrode active materials.

Furthermore, it is found that favorable cycle characteristics are obtained particularly when the crystallite size of the (003) plane falls within a predetermined range. This is because, when the crystallite size of the (003) plane is large, the expansion/contraction associated with the insertion and extraction of lithium increases, resulting in greater cycle degradation due to structural strain. Conversely, when the crystallite size of the (003) plane is too small, the stability of the crystal itself decreases, structural degradation due to charge and discharge tends to proceed, and cycle degradation increases.

Accordingly, for a positive electrode active material for a lithium-ion battery having a predetermined composition, if the crystallite size of the (003) plane falls within a predetermined range, it can be determined that the positive electrode active material for a lithium-ion battery has favorable cycle characteristics.

For example, for a positive electrode active material for a lithium-ion battery represented by the compositional formula: LiₐNi_{(1-b-c-d)}Co_{b}Mn_{c}M_{d}O₂ (wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007), if the crystallite size of the (003) plane is 580 to 840 Å, it can be determined that the positive electrode active material has favorable cycle characteristics.

Furthermore, for example, for a positive electrode active material for a lithium-ion battery represented by the compositional formula: LiₐNi_{(1-b-c-d)}Co_{b}Mn_{c}M_{d}O₂ (wherein M is Ta; 0.98 ≤ a ≤ 1.09; 0.13 ≤ b ≤ 0.16; 0.02 ≤ c ≤ 0.05; and 0 ≤ d ≤ 0.007), if the crystallite size of the (003) plane is 400 to 650 Å, it can be determined that the positive electrode active material has favorable cycle characteristics.

Next, based on the correlation, the crystallite size of an evaluation positive electrode active material corresponding to the crystallite sizes of the group of positive electrode active materials is measured, and the cycle characteristics of the evaluation positive electrode active material are evaluated from the crystallite size of the evaluation positive electrode active material.

Specifically, first, an evaluation positive electrode active material is prepared. The evaluation positive electrode active material is, as described above, a positive electrode active material represented by the compositional formula: LiₐNi_{(1-b-c-d)}CO_{b}Mn_{c}M_{d}O₂ (wherein M is at least one selected from Mg, Al, Ca, and Ta; 0.98 ≤ a ≤ 1.10; 0.13 ≤ b ≤ 0.22; 0.02 ≤ c ≤ 0.32; and 0 ≤ d ≤ 0.007).

Next, the crystallite size of the evaluation positive electrode active material corresponding to the crystallite sizes of the group of positive electrode active materials is measured. More specifically, the crystallite size of the evaluation positive electrode active material is measured by the same measurement method as that used for the group of positive electrode active materials.

Next, for example, in a case where the correlation between the cycle characteristic evaluation results and the crystallite sizes of the positive electrode active materials indicates that, for a positive electrode active material for a lithium-ion battery having a predetermined composition, a crystallite size of the (003) plane of 400 to 650 Å is determinative of favorable cycle characteristics, if the crystallite size of the evaluation positive electrode active material falls within the range of 400 to 650 Å, it can be determined that the evaluation positive electrode active material has favorable cycle characteristics.

As described above, according to the evaluation method for a positive electrode active material for a lithium-ion battery according to an embodiment of the present invention, for the evaluation of battery-related characteristics such as cycle characteristics, once the correlation between cycle characteristic evaluation results and the crystallite sizes of the positive electrode active materials is derived, the cycle characteristics and other such battery-related characteristics can be evaluated simply by measuring the crystallite size of the evaluation positive electrode active material for a lithium-ion battery and applying it to the correlation. For this reason, there is no need to fabricate precise cell electrodes and obtain data by repeatedly conducting charge/discharge tests over several days using a charge/discharge tester for the purpose of evaluating cycle characteristics, thus eliminating the problem of it taking a long time to obtain results. In this way, according to the evaluation method for a positive electrode active material for a lithium-ion battery according to an embodiment of the present invention, it becomes possible to efficiently evaluate cycle characteristics without fabricating a battery.

### (Positive Electrode for Lithium-Ion Battery, and Lithium-Ion Battery)

Using the positive electrode active material for a lithium-ion battery that has been determined to have favorable cycle characteristics as described above, a positive electrode for a lithium-ion battery according to an embodiment of the present invention can be fabricated. The positive electrode for a lithium-ion battery according to an embodiment of the present invention has, for example, a structure in which a positive electrode mixture prepared by mixing the positive electrode active material for a lithium-ion battery, a conductive auxiliary agent, and a binder is provided on one or both sides of a current collector. Furthermore, the lithium-ion battery according to an embodiment of the present invention comprises the positive electrode for a lithium-ion battery having such a configuration, and a known negative electrode for a lithium-ion battery.

Examples of conductive auxiliary agents include metal-based conductive auxiliary agents (aluminum, stainless steel (SUS), silver, gold, copper, titanium, etc.), carbon-based conductive auxiliary agents (graphite, carbon black (acetylene black, Ketjenblack, furnace black, channel black, and thermal black, etc.), etc.), and mixtures thereof, etc. These conductive auxiliary agents may be used alone or in combination of two or more. Furthermore, these metals may also be used in the form of alloys or metal oxides. Among these, from the viewpoint of electrical stability, more preferred are aluminum, stainless steel, silver, gold, copper, titanium, carbon-based conductive auxiliary agents, and mixtures thereof; still more preferred are silver, gold, aluminum, stainless steel, and carbon-based conductive auxiliary agents; and particularly preferred are carbon-based conductive auxiliary agents. Furthermore, these conductive auxiliary agents may be those obtained by coating the periphery of a particulate ceramic material or resin material with a conductive material (preferably a metallic one among the conductive auxiliary agents mentioned above) by plating or the like. The shape (form) of the conductive auxiliary agent is not limited to a particulate form, and may be a form other than a particulate form, including forms that have been put into practical use as so-called filler-type conductive auxiliary agents, such as carbon nanofibers and carbon nanotubes.

Examples of binders include substances generally used in positive electrode mixtures for lithium-ion batteries; preferred, however, are copolymers having a structure derived from vinylidene fluoride, polyvinylidene fluoride (PVDF), copolymers or homopolymers having a structure derived from tetrafluoroethylene (TFE), and copolymers or homopolymers having a structure derived from hexafluoropropylene (HFP). Specific examples include PVDF-HFP, PVDF-HFP-TFE, PVDF-TFE, and TFE-HFP.

The positive electrode mixture is prepared by mixing the positive electrode active material for a lithium-ion battery, the conductive auxiliary agent, and the binder in a solvent to form a positive electrode mixture slurry, which is then applied to one or both sides of the current collector, dried, and otherwise processed to form a positive electrode active material layer on the current collector.

As the solvent for the positive electrode mixture slurry, known organic solvents, such as hydrocarbon-based organic solvents, amide compounds, lactam compounds, urea compounds, organic sulfur compounds, and cyclic organophosphorus compounds, can be used as a single solvent or as a mixed solvent. As the hydrocarbon-based organic solvents, saturated hydrocarbons, unsaturated hydrocarbons, or aromatic hydrocarbons can be used. Examples of saturated hydrocarbons include hexane, pentane, 2-ethylhexane, heptane, decane, and cyclohexane. Examples of unsaturated hydrocarbons include hexene, heptene, and cyclohexene. Examples of aromatic hydrocarbons include toluene, xylene, decalin, and 1,2,3,4-tetrahydronaphthalene. Among these, toluene and xylene are particularly preferred.

Materials constituting the current collector include metallic materials such as copper, aluminum, titanium, stainless steel, nickel, and alloys thereof, as well as calcined carbon, conductive polymer materials, and conductive glass. Among these, aluminum is particularly preferred from the viewpoints of weight reduction, corrosion resistance, and high conductivity. Furthermore, the current collector is preferably a resin current collector made of a conductive polymer material. The shape of the current collector is not particularly limited, and may be a sheet-shaped current collector made of the above-mentioned materials, or a layer formed by deposition of fine particles composed of the above-mentioned materials. The thickness of the current collector is not particularly limited, but is preferably 1 to 30 µm. Examples of conductive polymer materials constituting the resin current collector include conductive polymers and materials obtained by adding a conductive auxiliary agent to a resin as necessary.

From the viewpoint of battery performance, the thickness of the positive electrode for a lithium-ion battery is preferably 10 to 100 µm, and more preferably 20 to 50 µm.

A lithium-ion battery using the positive electrode for a lithium-ion battery is obtained by combining a negative electrode as a counter electrode with the positive electrode, accommodating them together with a separator in a cell container, injecting an electrolytic solution, and sealing the cell container. Alternatively, a bipolar electrode is fabricated by forming the positive electrode on one side of the current collector and the negative electrode on the other side, and the lithium-ion battery is obtained by laminating the bipolar electrode with a separator, accommodating them in a cell container, injecting an electrolytic solution, and sealing the cell container.

The negative electrode includes a negative electrode active material, a conductive auxiliary agent, a current collector, and the like. Known negative electrode active materials for lithium-ion batteries can be used as the negative electrode active material, including carbon-based materials (graphite, non-graphitizable carbon, amorphous carbon, calcined resin bodies (e.g., those obtained by calcining and carbonizing phenol resins, furan resins, etc.), cokes (e.g., pitch coke, needle coke, petroleum coke, etc.), carbon fibers, etc.), silicon-based materials (silicon, silicon oxide (SiOₓ), silicon-carbon composites (those obtained by coating the surface of carbon particles with silicon and/or silicon carbide, those obtained by coating the surface of silicon particles or silicon oxide particles with carbon and/or silicon carbide, silicon carbide, etc.), silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.), etc.), conductive polymers (e.g., polyacetylene, polypyrrole, etc.), metals (tin, aluminum, zirconium, titanium, etc.), metal oxides (titanium oxides, lithium-titanium oxides, etc.), metal alloys (e.g., lithium-tin alloys, lithium-aluminum alloys, lithium-aluminum-manganese alloys, etc.), and the like, as well as mixtures thereof with carbon-based materials. Furthermore, the same conductive auxiliary agents as those described above for the positive electrode can be suitably used.

The current collector includes the same current collectors as those described above for the positive electrode, and copper is preferred from the viewpoints of weight reduction, corrosion resistance, and high conductivity. Furthermore, a resin current collector may also be used, and the same current collectors as those described above for the positive electrode can be suitably used. The thickness of the current collector is not particularly limited, but is preferably 10 to 60 µm.

Examples of the separator include known separators for lithium-ion batteries, such as porous films made of polyethylene or polypropylene, laminated films of porous polyethylene films and porous polypropylene films, nonwoven fabrics made of synthetic fibers (polyester fibers, aramid fibers, etc.) or glass fibers, and those having ceramic fine particles such as silica, alumina, and titania adhered to their surfaces.

### EXAMPLES

Examples are provided below for better understanding of the present invention and its advantages, but the present invention is not limited to these examples.

### (Example 1)

First, the correlation between the cycle characteristic evaluation results and the crystallite sizes of the positive electrode active materials was derived by the following method.

Specifically, a group of positive electrode active materials for a lithium-ion battery, each represented by the compositional formula: LiₐNi_{(1-b-c-d)}Co_{b}Mn_{c}M_{d}O₂ (wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007), were prepared. Next, XRD diffraction patterns of the group of positive electrode active materials for a lithium-ion battery were measured.

The XRD diffraction patterns were measured using the following XRD diffractometer under the following conditions:
- XRD diffractometer: SmartLab (manufactured by Rigaku Corporation)
- X-ray source: CuKα (λ = 1.5406 Å)
- Sample: positive electrode active material applied to a glass sample holder (2 cm × 1.5 cm, depth 0.3 mm)
- Detector: D/tex
- Measurement range: 2θ = 10° to 80°
- Scan axis: 2θ/θ; scan speed: 1 degree min⁻¹
- Step width: 0.01 degree
- Slit width: IS (DS) 1/4°, RS1 10 mm, RS2 10 mm

Subsequently, from the full width at half maximum of the diffraction peak of the (003) plane in the XRD diffraction patterns of the group of positive electrode active materials for a lithium-ion battery, the crystallite size of the (003) plane was calculated using the Scherrer equation represented by the following formula (1): $s = Kλ / Bcosθ$

In the above formula (1), s is the crystallite size of the (003) plane, λ is the X-ray wavelength, B is the full width at half maximum of the diffraction peak of the (003) plane, θ is the diffraction angle (rad), and K is the Scherrer constant. In the present embodiment, K is set to 0.9.

Next, cycle characteristic evaluation was performed for each battery fabricated using positive electrode active materials having mutually different crystallite sizes of the (003) plane among the positive electrode active materials as electrode materials.

Specifically, first, 11 positive electrode active materials having mutually different crystallite sizes of the (003) plane calculated by the Scherrer equation were selected. The 11 positive electrode active materials were designated as Test Examples 1A to 11A, and their compositions, average particle size D50, BET specific surface area, and tap density are shown in Table 1.

### (Average Particle Size D50)

The average particle size D50 of the positive electrode active materials of Test Examples 1A to 11A was measured as follows. First, 100 mg of the positive electrode active material (powder) was dispersed by irradiating with 40 W of ultrasonic waves for 60 seconds at 50% flow rate using a laser diffraction particle size distribution analyzer "MT3300EXII" manufactured by Microtrac, and then the particle size distribution was measured to obtain a volume-based cumulative particle size distribution curve. In the obtained cumulative particle size distribution curve, the volume particle size at 50% cumulation was taken as the 50% cumulative volume particle size D50 (average particle size D50) of the positive electrode active material powder. During measurement, the aqueous solvent was passed through a 0.02 µm filter, the solvent refractive index was set to 1.333, the particle permeability condition was set to permeable, the particle refractive index was set to 1.81, the shape was set to non-spherical, the measurement range was set to 0.021 to 2000 µm, and the measurement time was set to 30 seconds.

### (Tap Density)

The tap density of the positive electrode active materials of Test Examples 1A to 11A was measured as follows. First, 5 g of the positive electrode active material sample (powder) was placed in a 10 cc graduated cylinder, set in a powder density meter "KYT-4000K" manufactured by Seishin Enterprise Co., Ltd., tapped 1500 times with a stroke length of 55 mm, and then the scale of the graduated cylinder was read. Next, "amount of sample charged (5 g) / graduated cylinder scale reading (cc)" was calculated, and this value was taken as the tap density (g/cc).

### (BET Specific Surface Area)

The BET specific surface area of the positive electrode active materials of Test Examples 1A to 11A was measured as follows. First, 1.0 g of the positive electrode active material sample (powder) was weighed into a glass cell, set in a degassing device, the inside of the glass cell was filled with nitrogen gas, and then heat-treated at 40°C for 20 minutes in a nitrogen gas atmosphere for degassing. Thereafter, the glass cell containing the degassed sample (powder) was set in a specific surface area measuring device "Monosorb Model MS-21" manufactured by Quantachrome, and the specific surface area X was measured by the BET method (one-point method) while flowing a mixed gas of He: 70 at% - N₂: 30 at% as adsorption gas.

Next, for each of the positive electrode active materials of Test Examples 1A to 11A, a battery was fabricated using the respective positive electrode active material as an electrode material as follows.

First, the positive electrode active material, acetylene black as a conductive auxiliary agent, and polyvinylidene fluoride as a binder were weighed in a ratio of 90:5:5, and the polyvinylidene fluoride as the binder was dissolved in an organic solvent (N-methylpyrrolidone), mixed together with the positive electrode active material and the conductive auxiliary agent to form a slurry, applied to an aluminum foil, dried, and press-molded to form a positive electrode.

Next, a 2032-type coin cell for evaluation was fabricated as a battery structure using Li as the counter electrode, and a solution of 1 M LiPF₆ dissolved in EC-DMC (3:7) was used as the electrolytic solution. Under the following conditions, the discharge capacity (0.05 C) and the charge/discharge cycle (capacity retention rate) were measured:
- Discharge capacity (0.05 C)
   Temperature: 25°C; charge: 4.30 V, 0.05 C, 20 h; discharge: 3.0 V, 0.05 C
- Charge/discharge cycle (capacity retention rate)
   Temperature: 55°C; charge: 4.30 V, 1 C, 2.5 h; discharge: 3.0 V, 1 C

Ratio of discharge capacity at the 20th cycle to the discharge capacity at the 1st cycle.

Such cycle characteristic evaluation was performed for each battery fabricated using the positive electrode active materials of Test Examples 1A to 11A as electrode materials. The evaluation results are shown in Table 1.

**Table 1**

| | Positive Electrode Active Material Powder Properties | | | | Positive Electrode Active Material Composition LiₐNi_{(1-b-c-d)}Co_{b}Mn_{c}M_{d}O₂ | | | | | | | Electrochemical Properties | |
|---|---|---|---|---|---|---|---|---|---|---|---|---|---|
| | Average Particle Size D50 | BET Specific Surface Area | Tap Density | Crystallite Size of the (003) Plane | Ni | Co | Mn | Mg | Al | Ca | Li/Me Ratio | Discharge Capacity | Cycle Characteristics at the 20th Cycle |
| | *µ* m | m²/g | g/cc | Å | mol% | mol% | mol% | mol% | mol% | mol% | | mAh/g | % |
| Test Example 1A | 5.9 | 0.70 | 2.1 | 824 | 49.9 | 19.7 | 30.4 | | | 0.0126 | 1.03 | 174 | 96.9 |
| Test Example 2A | 9.7 | 0.30 | 2.6 | 670 | 49.7 | 20.3 | 30.1 | | | | 1.05 | 176 | 96.7 |
| Test Example 3A | 10.2 | 0.26 | 2.6 | 740 | 50.9 | 19.8 | 29.2 | | | | 1.08 | 168 | 96.3 |
| Test Example 4A | 9.4 | 0.30 | 2.6 | 670 | 50.3 | 20.0 | 29.6 | | | | 1.05 | 177 | 97.3 |
| Test Example 5A | 10.1 | 0.35 | 2.5 | 694 | 49.7 | 20.2 | 30.2 | | | | 1.10 | 173 | 97.8 |
| Test Example 6A | 9.2 | 0.32 | 2.6 | 597 | 49.6 | 20.2 | 30.1 | 0.045 | 0.1254 | | 1.05 | 176 | 97.1 |
| Test Example 7A | 8.9 | 0.35 | 2.4 | 670 | 49.4 | 20.1 | 30.0 | 0.024 | 0.4729 | | 1.05 | 175 | 97.2 |
| Test Example 8A | 9.6 | 0.31 | 2.6 | 625 | 49.8 | 20.1 | 30.1 | | | 0.048 | 1.05 | 177 | 97.1 |
| Test Example 9A | 9.4 | 0.29 | 2.6 | 665 | 48.8 | 20.0 | 30.3 | 0.486 | 0.2962 | 0.0521 | 1.07 | 172 | 98.0 |
| Test Example 10A | 9.4 | 0.28 | 2.6 | 412 | 50.1 | 29.8 | 20.1 | | 0.0191 | 0.0004 | 1.06 | 176 | 95.2 |
| Test Example 11A | 9.8 | 0.33 | 2.6 | 856 | 50.9 | 20.0 | 29.0 | 0.029 | 0.0007 | | 1.07 | 162 | 94.9 |

Next, a correlation between the obtained cycle characteristic evaluation results and the crystallite sizes of the positive electrode active materials was derived.

Specifically, based on Table 1, a graph was prepared with the crystallite sizes of the positive electrode active materials of Test Examples 1A to 11A on the X-axis and the cycle characteristics on the Y-axis. The graph is shown in FIG. 2. In the graph of FIG. 2, positive electrode active materials having cycle characteristics of 96.0% or greater were defined as those having favorable cycle characteristics. According to the graph in FIG. 2, it was found that when the crystallite size of the (003) plane falls within the range of 580 to 840 Å, favorable cycle characteristics of 96.0% or greater are obtained. The relationship thus derived (the relationship that if the crystallite size of the positive electrode active material falls within the range of 580 to 840 Å, the cycle characteristics obtained will be 96.0% or greater) was taken as the correlation between the obtained cycle characteristic evaluation results and the crystallite sizes of the positive electrode active materials.

Next, as an evaluation positive electrode active material for a lithium-ion battery, a positive electrode active material for a lithium-ion battery represented by the compositional formula: Li₁.₀₆Ni₄₉.₉Co₁₉.₇Mn₃₀.₄Ca₀.₀₁₃O₂ was prepared, and the XRD diffraction pattern was measured under the same conditions as Test Examples 1A to 11A.

Next, the crystallite size of the evaluation positive electrode active material was measured by the same measurement method as that used for Test Examples 1A to 11A. The obtained crystallite size was 824 Å.

Next, based on the correlation between the cycle characteristic evaluation results and the crystallite sizes of the positive electrode active materials described above, the cycle characteristics of the evaluation positive electrode active material were evaluated from the crystallite size of the evaluation positive electrode active material, and since the obtained crystallite size fell within the range of 580 to 840 Å, it was found that the cycle characteristics obtained from the evaluation positive electrode active material were 96.0% or greater.

### (Example 2)

First, the correlation between the cycle characteristic evaluation results and the crystallite sizes of the positive electrode active materials was derived by the following method.

Specifically, a group of positive electrode active materials for a lithium-ion battery, each represented by the compositional formula: LiₐNi_{(1-b-c-d)}Co_{b}Mn_{c}M_{d}O₂ (wherein M is Ta; 0.98 ≤ a ≤ 1.09; 0.13 ≤ b ≤ 0.16; 0.02 ≤ c ≤ 0.05; and 0 ≤ d ≤ 0.007), were prepared. Next, XRD diffraction patterns of the group of positive electrode active materials for a lithium-ion battery were measured under the same conditions as Example 1.

Subsequently, from the full width at half maximum of the diffraction peak of the (003) plane in the XRD diffraction patterns of the measured group of positive electrode active materials for a lithium-ion battery, the crystallite size of the (003) plane was calculated in the same manner as Example 1 using the Scherrer equation represented by formula (1) described above.

Next, cycle characteristic evaluation was performed for each battery fabricated using positive electrode active materials having mutually different crystallite sizes of the (003) plane among the positive electrode active materials as electrode materials.

Specifically, first, 10 positive electrode active materials having mutually different crystallite sizes of the (003) plane calculated by the Scherrer equation were selected. The 10 positive electrode active materials were designated as Test Examples 1B to 10B, and their compositions, average particle size D50, BET specific surface area, and tap density are shown in Table 2. The measurement methods for average particle size D50, BET specific surface area, and tap density were the same as in Example 1.

Next, for each of the positive electrode active materials of Test Examples 1B to 10B, a battery was fabricated using the respective positive electrode active material as electrode materials in the same manner as Example 1, and the discharge capacity (0.05 C) and the charge/discharge cycle (capacity retention rate) were measured under the same conditions.

Such cycle characteristic evaluation was performed for each battery fabricated using the positive electrode active materials of Test Examples 1B to 10B as electrode materials. The evaluation results are shown in Table 2.

**Table 2**

| | Positive Electrode Active Material Powder Properties | | | | Positive Electrode Active Material Composition | | | | | Electrochemical Properties | |
|---|---|---|---|---|---|---|---|---|---|---|---|
| | Average Particle Size D50 | BET Specific Surface Area | Tap Density | Crystallite Size of the (003) Plane | Ni | Co | Mn | Ta | Li/Me 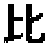 | Discharge Capacity | Cycle Characteristics at the 20th Cycle |
| | *µ* m | m²/g | g/cc | Å | mol% | mol% | mol% | mol% | | mAh/g | % |
| Test Example 1B | 5.6 | 0.40 | 2.5 | 632 | 82.3 | 14.8 | 2.9 | | 1.04 | 213 | 95.9 |
| Test Example 2B | 5.6 | 0.42 | 2.4 | 517 | 82.6 | 14.5 | 2.9 | | 1.02 | 212 | 95.1 |
| Test Example 3B | 5.5 | 0.41 | 2.4 | 560 | 82.6 | 14.5 | 2.9 | | 0.98 | 206 | 95.7 |
| Test Example 4B | 5.8 | 0.41 | 2.5 | 535 | 82.3 | 14.9 | 2.8 | | 1.05 | 217 | 95.6 |
| Test Example 5B | 5.9 | 0.38 | 2.4 | 487 | 82.5 | 14.7 | 2.8 | | 1.08 | 199 | 96.8 |
| Test Example 6B | 5.5 | 0.37 | 2.3 | 433 | 82.1 | 14.5 | 2.8 | 0.5 | 1.04 | 210 | 96.4 |
| Test Example 7B | 5.6 | 0.39 | 2.4 | 460 | 81.6 | 14.3 | 3.7 | 0.5 | 1.05 | 206 | 97.1 |
| Test Example 8B | 5.5 | 0.56 | 2.3 | 561 | 81.9 | 14.7 | 3.0 | 0.35 | 1.05 | 207 | 95.0 |
| Test Example 9B | 5.4 | 0.46 | 2.4 | 482 | 81.7 | 14.9 | 3.0 | 0.5 | 1.08 | 206 | 96.1 |
| Test Example 10B | 14.8 | 0.13 | 2.6 | 722 | 83.5 | 13.4 | 3.1 | | 0.98 | 210 | 94.1 |

Next, a correlation between the obtained cycle characteristic evaluation results and the crystallite sizes of the positive electrode active materials was derived.

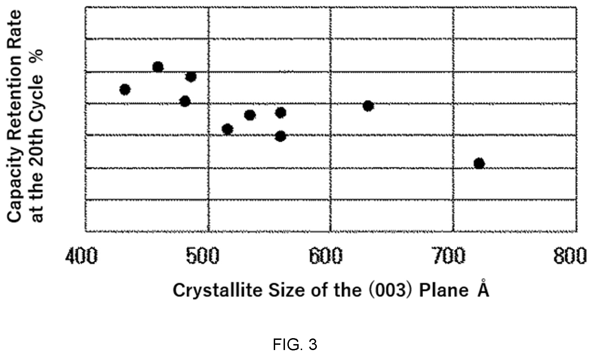

Specifically, based on Table 2, a graph was prepared with the crystallite sizes of the positive electrode active materials of Test Examples 1B to 10B on the X-axis and the cycle characteristics on the Y-axis. The graph is shown in FIG. 3. In the graph of FIG. 3, positive electrode active materials having cycle characteristics of 95.0% or greater were defined as those having favorable cycle characteristics. According to the graph in FIG. 3, it was found that when the crystallite size of the (003) plane falls within the range of 400 to 650 Å, favorable cycle characteristics of 95.0% or greater were obtained. The relationship thus derived (the relationship that if the crystallite size of the positive electrode active material falls within the range of 400 to 650 Å, the cycle characteristics obtained will be 95.0% or greater) was taken as the correlation between the obtained cycle characteristic evaluation results and the crystallite sizes of the positive electrode active materials.

Next, as an evaluation positive electrode active material for a lithium-ion battery, a positive electrode active material for a lithium-ion battery represented by the compositional formula: Li₁.₀₄Ni₈₂.₁Co₁₄.₅Mn₂.₈Ta₀.₅O₂ was prepared, and the XRD diffraction pattern was measured under the same conditions as Test Examples 1B to 10B.

Next, the crystallite size of the evaluation positive electrode active material was measured by the same measurement method as that used for Test Examples 1B to 10B. The obtained crystallite size was 433 Å.

Next, based on the correlation between the cycle characteristic evaluation results and the crystallite sizes of the positive electrode active materials described above, the cycle characteristics of the evaluation positive electrode active material were evaluated from the crystallite size of the evaluation positive electrode active material, and since the obtained crystallite size fell within the range of 400 to 650 Å, it was found that the cycle characteristics obtained from the evaluation positive electrode active material were 95.0% or greater.

According to one embodiment of the present invention, since it is possible to provide an evaluation method for a positive electrode active material for a lithium-ion battery that enables efficient evaluation of cycle characteristics without fabricating a battery, this can lead to the spread of non-fossil fuel energy, which can reduce the use of fossil energy such as oil and gas that accounts for a large part of current energy production, and has the potential to contribute to the suppression of global warming. Furthermore, since materials with low environmental impact such as lithium, carbon, manganese, nickel, and cobalt are used as the main materials, and hazardous substances such as cadmium, lead, and mercury are not used, there is a potential to reduce the environmental impact. For this reason, one embodiment of the present invention has the potential to contribute to Goal 7 "Ensure access to affordable, reliable, sustainable and modern energy for all," Goal 9 "Build resilient infrastructure, promote inclusive and sustainable industrialization and foster innovation," and Goal 12 "Ensure sustainable consumption and production patterns" of the United Nations Sustainable Development Goals (SDGs).

## Claims

1. A method for evaluating a positive electrode active material for a lithium-ion battery, comprising:
a step of measuring XRD diffraction patterns of a group of positive electrode active materials for a lithium-ion battery, each represented by the compositional formula: LiₐNi_{(1-b-c-d)}Co_{b}Mn_{c}M_{d}O₂
(wherein M is at least one selected from Mg, Al, Ca, and Ta; 0.98 ≤ a ≤ 1.10; 0.13 ≤ b ≤ 0.22; 0.02 ≤ c ≤ 0.32; and 0 ≤ d ≤ 0.007);
a step of calculating a crystallite size of the (003) plane from the XRD diffraction patterns of the positive electrode active materials using the Scherrer equation;
a step of performing cycle characteristic evaluation for each battery fabricated using positive electrode active materials having mutually different crystallite sizes of the (003) plane among the positive electrode active materials as electrode materials, and deriving a correlation between the obtained cycle characteristic evaluation results and the crystallite sizes of the positive electrode active materials; and
a step of, based on the correlation, measuring a crystallite size of an evaluation positive electrode active material corresponding to the crystallite sizes of the group of positive electrode active materials, and evaluating cycle characteristics of the evaluation positive electrode active material from the crystallite size of the evaluation positive electrode active material.

2. The evaluation method for a positive electrode active material for a lithium-ion battery according to claim 1, wherein the positive electrode active material is represented by the compositional formula: LiₐNi_{(1-b-c-d)}Co_{b}Mn_{c}M_{d}O₂
(wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007).

3. The evaluation method for a positive electrode active material for a lithium-ion battery according to claim 2, wherein, if the crystallite size of the (003) plane of the evaluation positive electrode active material is 580 to 840 Å, the cycle characteristics of the evaluation positive electrode active material are evaluated as favorable.

4. The evaluation method for a positive electrode active material for a lithium-ion battery according to claim 1, wherein the positive electrode active material is represented by the compositional formula: LiₐNi_{(1-b-c-d)}Co_{b}Mn_{c}M_{d}O₂
(wherein M is Ta; 0.98 ≤ a ≤ 1.09; 0.13 ≤ b ≤ 0.16; 0.02 ≤ c ≤ 0.05; and 0 ≤ d ≤ 0.007).

5. The evaluation method for a positive electrode active material for a lithium-ion battery according to claim 4, wherein, if the crystallite size of the (003) plane of the evaluation positive electrode active material is 400 to 650 Å, the cycle characteristics of the evaluation positive electrode active material are evaluated as favorable.

6. A positive electrode active material for a lithium-ion battery represented by the compositional formula: LiₐNi_{(1-b-c-d)}Co_{b}Mn_{c}M_{d}O₂
(wherein M is at least one selected from Mg, Al, and Ca; 1.03 ≤ a ≤ 1.10; 0.18 ≤ b ≤ 0.22; 0.28 ≤ c ≤ 0.32; and 0 ≤ d ≤ 0.007),
wherein, when an XRD diffraction pattern of the positive electrode active material is measured and a crystallite size of the (003) plane is calculated therefrom using the Scherrer equation, the crystallite size is 580 to 840 Å.

7. A positive electrode active material for a lithium-ion battery represented by the compositional formula: LiₐNi_{(1-b-c-d)}Co_{b}Mn_{c}M_{d}O₂
(wherein M is Ta; 0.98 ≤ a ≤ 1.09; 0.13 ≤ b ≤ 0.16; 0.02 ≤ c ≤ 0.05; and 0 ≤ d ≤ 0.007),
wherein, when an XRD diffraction pattern of the positive electrode active material is measured and a crystallite size of the (003) plane is calculated therefrom using the Scherrer equation, the crystallite size is 400 to 650 Å.
